# EUROPEAN PATENT APPLICATION

(11) **EP 0 557 033 A2**
(43) Date of publication of application: **25.08.1993**
(21) Application number: 93301065.4
(22) Date of filing: 15.02.1993
(51) Int. Cl.: H04N 5/45, H04N 5/445

(54) **Picture selector and picture selecting method for display device**

(30) Priority: 18.02.1992 JP 61021/92
(71) Applicant: SONY CORPORATION, Tokyo 141 (JP)
(72) Inventor: Saitoh, Mitsumasa, c/o Sony Corporation, Shinagawa-ku, Tokyo 141 (JP); Sano, Shigeyuki, c/o Sony Corporation, Shinagawa-ku, Tokyo 141 (JP); Kuwabara, Katsumi, c/o Sony Corporation, Shinagawa-ku, Tokyo 141 (JP)
(74) Representative: Ayers, Martyn Lewis Stanley

(57) **Abstract**

A picture or TV channel selector includes a controller such as a mouse controller for controlling the movement of a cursor on a display screen of a display device capable of performing multi-picture display. The cursor on the display screen is moved onto a desired one of plural displayed pictures by manipulation of the mouse controller, and then the mouse controller is clicked to display the desired picture as a main picture.

## Description

This invention relates to a picture selector and a method of selecting a desired picture from plural pictures for use in a display device, and particularly to a picture selector and a picture selecting method for use in a display device in which multi-picture display is carried out.

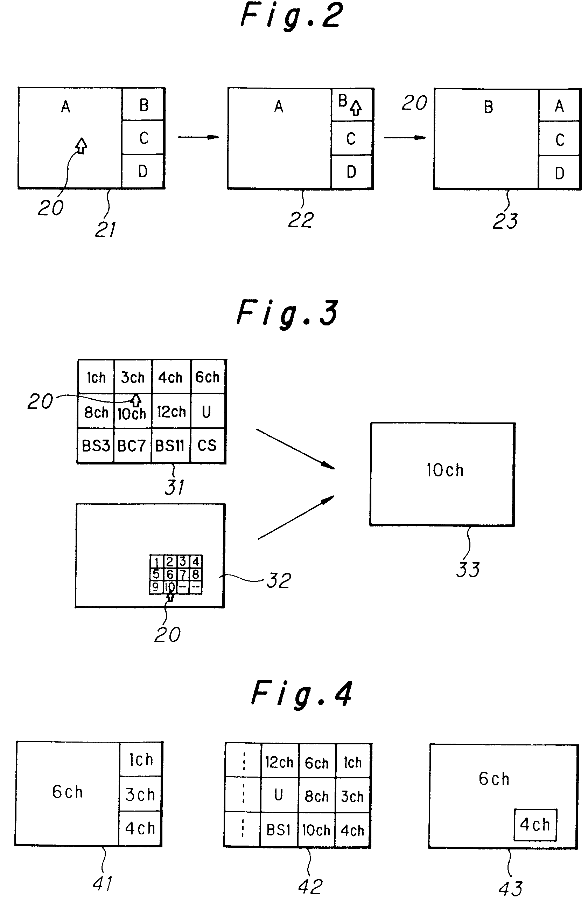

A picture selector technique has been known as a technique for performing a channel selection in a television receiver and a display picture selection in a display device. In this picture selector technique, plural picture frames are displayed and monitored on a display screen to suitably and rapidly select the channel of a desired picture frame. The picture selector technique has various selection modes. As one of the display modes, as shown in Fig. 4 of the accompanying drawings, sub picture frames which are picture frames of programs on different channels are reductively displayed (picture frames 41 and 43) in such a manner that they are arranged out of a master or main picture frame which is a picture frame of image-received channel (hereinafter referred to as "PoutP mode") or they are embedded into the main picture frame (hereinafter referred to as "PinP mode"), and a desired one of the programs on different channels is selected by the user while checking the sub picture frames. As another mode, plural picture frames of different channels are reduced in size and displayed on the screen in such a manner as to be arranged in a matrix or other forms to perform a multi-channel display (picture frames 42), that is, the plural picture frames of different channels are simultaneously monitored to select a desired channel.

In order to select a desired sub picture frame in this type of conventional picture selector, it is required for a viewer to first check a multi-picture on a screen, memorise the desired channel number, then return a currently-displayed picture frame to a main picture frame, and then push a channel selection key, or in PinP mode it is required for the viewer to take his eyes off the displayed picture frame once and then push a SWAP key or the like which is mounted on a remote controller.

An object of this invention is to provide a picture selector and a picture selecting method for use in a multi-picture display device in which the channel selecting operation can be made easier.

According to a first aspect of the invention, there is provided a picture selector for use in a display device capable of performing both of a single-channel display operation for displaying a picture of only one channel as a main picture on a screen, and a multi-picture display operation for simultaneously displaying plural pictures of different channels on a display screen, including:
cursor display means for displaying a cursor movable over a display area on the screen; and
picture selecting means for selecting a picture displayed in the screen area on which the cursor is located, and displaying the selected picture as a main picture on the screen.

The invention also provides a picture selector for use in a display device in which plural pictures are simultaneously displayed on a screen, including:
marking means for marking a specific symbol on a desired one of the plural pictures on the screen;
position monitoring means for monitoring the positions of the displayed plural pictures and the position of the marked symbol;
picture selecting means for selecting a desired one of the plural pictures on the basis of the marked symbol; and
picture exchange means for exchanging a current main picture for the picture selected by said picture selecting means on the basis of position information monitored by said position monitoring means.

The invention further provides a display device having a picture selector in which plural sub pictures are simultaneously displayed together with a master picture on a screen, including:
cursor display and control means for displaying a cursor on the screen and controlling the movement of said cursor over the screen;
master/sub picture processing means for processing the input master picture and the sub pictures to display the master and sub pictures in a predetermined arrangement on the screen; and
picture selecting means for selecting a desired one of the plural sub pictures by locating the cursor on the desired one using said cursor display and control means, and exchanging the master picture for the selected sub picture to display the selected sub picture as a main picture on the screen.

The invention further provides a display device having a picture selector in which plural sub pictures are simultaneously displayed together with a master picture on a screen, including:
cursor generating means for generating a cursor and displaying the cursor on the screen;
cursor control means for controlling the movement of said cursor over the screen;
video signal processing means for processing video signals of the input master picture to display the master picture at a first predetermined area on the screen;
sub picture processing means for processing video signals of the input sub pictures to display the sub pictures at a second predetermined area which is out of or inside of the first predetermined area on the screen; and
picture selecting means for selecting a desired one of the plural sub pictures by locating the cursor on the desired one using said cursor display and control means, and exchanging the master picture for the selected sub picture to display the selected sub picture as a main picture on the screen.

A second aspect of the invention provides a picture selecting method for a display device in which plural sub pictures are simultaneously displayed together with a master picture on a screen, comprising the steps of:
displaying a cursor on a display on the screen;
moving the cursor onto a desired one of the plural sub pictures;
selecting the desired picture from the plural sub pictures; and
exchanging the displayed master picture for the selected sub picture to display the selected sub picture as a new master picture .

Thus, the picture selector may include a controller such as a mouse controller (or other pointing device such as a trackball) for controlling the movement of a cursor on a display screen of a display device capable of performing multi-picture display. The cursor on the display screen is moved onto a desired one of plural displayed picture frames by manipulation of the mouse controller, and then the mouse controller is clicked to display the desired picture frame as a main picture frame.

According to the picture selector thus constructed, a viewer moves a cursor onto a desired picture frame by the manipulation of the mouse controller while monitoring plural displayed picture frames, so that a desired picture or channel can be selected only by the click operation of the mouse controller.

The invention will be further described by way of non-limitative example with reference to the accompanying drawings, in which:-
Fig. 1 is a block diagram of a video signal processing unit of a television image receiver capable of performing master/sub picture frame displaying operation, to which a picture selector of this invention is applied;
Fig. 2 is a schematic diagram of picture selection using a multi-picture display frame including a master picture frame and sub picture frames;
Fig. 3 is a schematic diagram of picture selection using another multi-picture display frame; and
Fig. 4 is a schematic diagram of explaining a multi-picture display frame.

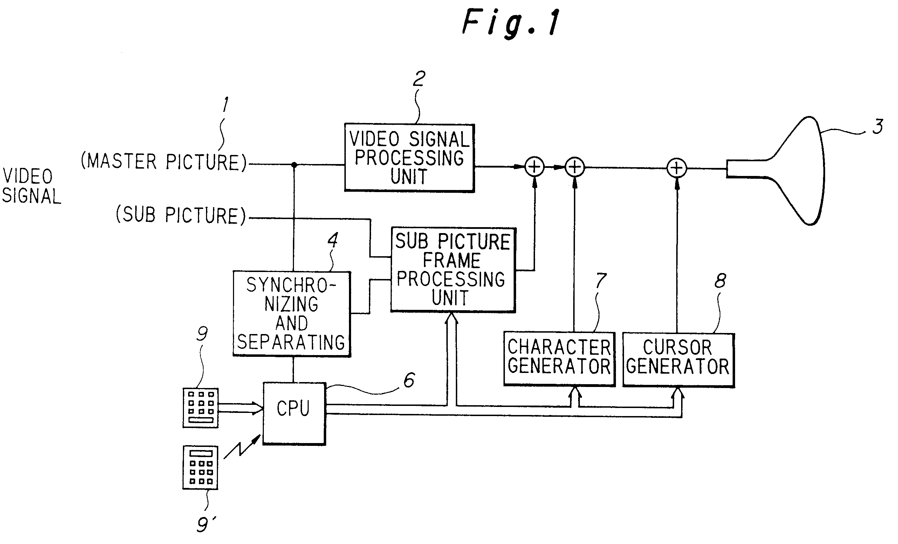

Fig. 1 is a block diagram of a video signal processing unit for a television image receiver capable of displaying master/sub picture frames using a picture selector of this invention. A reference numeral 1 represents video signals of master and sub pictures which are supplied from broadcast receiving signals of VHF, UHF, BS, CS. etc. or from an external signal source, a reference numeral 2 represents a master-picture video signal processing unit, a reference numeral 3 represents a CRT display, a reference numeral 4 represents a synchronizing and separating unit, a reference numeral 5 represents a sub-picture processing unit, a reference numeral 6 represents a CPU, a reference numeral 7 represents a character generator, a reference numeral 8 represents a cursor generator, a reference numeral 9 represents a key input unit, and a reference numeral 9' represents a remote control input device.

Now, as shown in Fig. 2, the master picture frame A which has been processed in the video signal processing unit 2 and the sub picture frames B, C and D which have been processed in the sub-picture processing unit 5 are displayed in a multi-display mode to display a multi-display picture frame 21 on the screen, and a cursor 20 is also superposedly displayed on the picture frame 21 by the cursor generator 8. The positions of the sub picture frames B, C and D and the cursor 20 on the multi-display picture frame 21 are monitored by the CPU at all times, and the cursor 20 can be moved in any direction on the picture frame 21 by manipulating the key input unit 9 or the remote control input device 9'. For this purpose the unit 9 and/or the device 9' may be provided with a so-called "pointing device" i.e. an item such as a mouse or trackball which provides output signals representing movements in two orthogonal directions (vertically and horizontally on the screen of the display) in response to operation of a control element by the user, as by rolling the mouse or the ball of the trackball. Thus the display device and/or the remote control unit (or indeed other equipment associated with the display device, such as a VTR) may be provided with a mouse and/or trackball or other pointing device to move the on-screen cursor. For example, when the cursor 20 is moved onto the sub picture frame B as shown by a picture frame 22 or into the picture area surrounded by the frame and a click instruction is made at this state, the CPU 6 identifies a picture frame to be exchanged (i.e., a picture image to be newly displayed as a master picture frame) on the basis of the monitored position information of the on-screen cursor, and outputs a master/sub picture exchange instruction to a related unit of the television image receiver so that the picture B is displayed as a master picture frame while the picture A is displayed as a sub picture as shown by a picture frame 23, thereby performing a picture frame selection.

Fig. 3 is an explanatory diagram of the picture frame selection using another multi-picture framed display. In this multi-display picture, plural picture of different channels are reductively and simultaneously displayed in a matrix form on the screen as shown by a picture 31 (in multi- channel display mode). When a tenth channel for example is indicated by the cursor 20 on the multi-channel display as described above, the picture of the tenth channel may be selected and displayed as a main picture.

Alternatively, a channel figure table 32 for sub pictures may be superposedly displayed on a main picture (in a channel-index display mode). In this case, when a tenth channel is indicated by the cursor 20, the picture of the tenth channel can be likewisely selected as shown by a picture 33.

In the above display modes, a channel number for each picture on the multi-channel display or each channel figure of the channel figure table may be displayed using a character generator 7.

According to the picture selector of this invention as described above, a desired picture or channel can be easily and properly selected while seeing the multi-displayed picture.

It will be appreciated that the pointing device used to move the cursor may be a trackball or mouse integrated with the remote controller or with the television display (or video tape recorder).

## Claims

1. A picture selector for use in a display device capable of performing both of a single-channel display operation for displaying a picture of only one channel as a main picture on a screen, and a multi-picture display operation for simultaneously displaying plural pictures of different channels on a display screen, including:
cursor display means for displaying a cursor movable over a display area on the screen; and picture selecting means for selecting a picture displayed in the screen area on which the cursor is located, and displaying the selected picture as a main picture on the screen.

2. A picture selector for use in a display device in which plural pictures are simultaneously displayed on a screen, including:
marking means for marking a specific symbol on a desired one of the plural pictures on the screen; and
selecting means for selecting the marked picture from the plural pictures to display the selected picture as a main picture on the screen.

3. The picture selector as claimed in claim 2, wherein said marking means comprises cursor display means for displaying a cursor movable over a display area on the screen;

4. A picture selector for use in a display device in which plural pictures are simultaneously displayed on a screen, including:
marking means for marking a specific symbol on a desired one of the plural pictures on the screen;
position monitoring means for monitoring the positions of the displayed plural pictures and the position of the marked symbol;
picture selecting means for selecting a desired one of the plural pictures on the basis of the marked symbol; and
picture exchange means for exchanging a current main picture for the picture selected by said picture selecting means on the basis of position information monitored by said position monitoring means.

5. A display device having a picture selector in which plural sub pictures are simultaneously displayed together with a master picture on a screen, including:
cursor display and control means for displaying a cursor on the screen and controlling the movement of said cursor over the screen;
master/sub picture processing means for processing the input master picture and the sub pictures to display the master and sub pictures in a predetermined arrangement on the screen; and
picture selecting means for selecting a desired one of the plural sub pictures by locating the cursor on the desired one using said cursor display and control means, and exchanging the master picture for the selected sub picture to display the selected sub picture as a main picture on the screen.

6. A display device having a picture selector in which plural sub pictures are simultaneously displayed together with a master picture on a screen, including:
cursor generating means for generating a cursor and displaying the cursor on the screen;
cursor control means for controlling the movement of said cursor over the screen;
video signal processing means for processing video signals of the input master picture to display the master picture at a first predetermined area on the screen;
sub picture processing means for processing video signals of the input sub pictures to display the sub pictures at a second predetermined area which is out of or inside of the first predetermined area on the screen; and
picture selecting means for selecting a desired one of the plural sub pictures by locating the cursor on the desired one using said cursor display and control means, and exchanging the master picture for the selected sub picture to display the selected sub picture as a main picture on the screen.

7. A picture selecting method for a display device in which plural sub pictures are simultaneously displayed together with a master picture on a screen, comprising the steps of:
displaying a cursor on a display on the screen;
moving the cursor onto a desired one of the plural sub pictures;
selecting the desired picture from the plural sub pictures; and
exchanging the displayed master picture for the selected sub picture to display the selected sub picture as a new master picture .

8. A television incorporating, or having operatively associated therewith a selector according to any one of claims 1 to 4 or display device according to claim 5 or 6 for selecting one of a number of television channels displayed simultaneously on the screen of the television.
